# EUROPEAN PATENT APPLICATION

(11) **EP 4 101 815 A1**
(43) Date of publication of application: **14.12.2022**
(21) Application number: 21178710.6
(22) Date of filing: 10.06.2021
(51) Int. Cl.: C01B 32/75

(54) **HYDROGEN SULFIDE REFORMING OF HYDROCARBONS**

(71) Applicant: Evonik Operations GmbH, 45128 Essen (DE)
(72) Inventor: Lautenschütz, Ludger, 63454 Hanau (DE); Fischer, Achim, 63773 Goldbach (DE); Lercher, Johannes A., 85521 Ottobrun (DE); Wang, Yong, 80796 München (DE); Shi, Hui, 85386 Eching (DE)
(74) Representative: Evonik Patent Association

(57) **Abstract**

The present invention relates to a process for the hydrogen sulfide reforming of a hydrocarbon to produce carbon disulfide in the presence of a catalyst comprising or consisting of an active phase comprising or consisting of an oxide and/or a sulfide of a metal, wherein said metal is a group 3, a group 4 and/or a group 5 metal.

## Description

The present invention relates to a process for the hydrogen sulfide reforming of a hydrocarbon to produce carbon disulfide.

Methane is the main component of natural gas, which can be used for hydrogen production via high-temperature reforming. For example, steam reforming or steam methane reforming (i.e., with water as co-reactant) gives synthesis gas, mixtures of hydrogen and carbon monoxide. Steam methane reforming has been adopted at industrial scale. Alternatively, synthesis gas also can be produced via the carbon dioxide reforming or dry reforming of methane, i.e., with carbon dioxide as the co-reactant. This process, however, is somewhat more endothermic than the process mentioned first. On the other hand, carbon dioxide reforming or dry reforming of methane also has several advantages over the steam methane reforming. One big advantage is the consumption of two equivalents of greenhouse gases, carbon dioxide and methane, compared to steam methane reforming with the consumption of only one equivalent of methane. However, a challenge to the commercialization of this process is the tendency of the thus produced hydrogen to react with carbon dioxide. For example, hydrogen reacts with carbon dioxide to produce a gas mixture of water and carbon monoxide. The carbon dioxide reforming also has seen much less commercial success because of current issues with more severe carbon deposition than in the steam reforming.

Methane reforming with hydrogen sulfide has been much less explored than the two reforming processes mentioned above although it has certain application potential. One example is the utilization of the so-called "sour" gases or acid gases, which denotes natural gas or any other gas mixtures containing significant quantities of hydrogen sulfide or similar acidic gases. Methane reforming with hydrogen sulfide produces a gas mixture of carbon disulfide and hydrogen. The product carbon disulfide can be further reacted to other carbon- and sulfur-containing chemicals with added value, such as methyl mercaptan, which is an important starting material in the production of, amongst others, methionine, dialkyl disulfide and methane sulfonic acid. The following scheme gives the chemical equation for the main reaction (1) of the methane reforming with hydrogen sulfide and two side reactions (2 and 3):

CH₄ + 2 H₂S → CS₂ + 4 H₂ (1)

CH4 → C₍ₛ₎ + 2 H₂ (2)

2 H₂S → S₂ (g) + 2 H₂ (3)

The methane decomposition reaction (2) leads to carbonaceous deposits on the catalysts typically involved in methane reforming with hydrogen sulfide. This leads to a continuous deactivation of the catalyst over time. The hydrogen sulfide decomposition reaction (3) is inevitable at the high temperatures of more than 600 °C, which is typically employed in this type of methane reforming. This reaction can be easily driven by heat alone in a non-catalytic way.

The published patent application US 2017/0144966 A1 discloses a method for preparing dimethyl sulfide, which involves the hydrogen sulfide reforming of a hydrocarbon. The published patent application US 2017/0158631 A1 discloses a method for preparing methyl mercaptan, which also involves the hydrogen sulfide reforming of a hydrocarbon. Specifically, both documents disclose that at least one hydrocarbon feedstock is reacted with hydrogen sulfide and optionally sulfur in the presence of a catalyst comprising one or more transition metals selected from platinum, rhodium, chromium and palladium to form carbon disulfide and hydrogen. In principle, the catalysts disclosed in the two documents catalyze the formation of carbon disulfide with a high selectivity. However, only two catalysts lead to acceptable methane conversion rates, specifically platinum on alumina and chromium oxide on alumina. Chromium oxide is toxic and thus not a desirable candidate for a catalyst in an industrial process. Further, it was found that the other catalyst platinum on alumina showed a rather strong deactivation at 900 °C. The deactivation of platinum on alumina even starts right from the beginning of the reaction of methane reforming with hydrogen sulfide. In other words, none of the catalysts disclosed in US 2017/0144966 A1 and US 2017/0158631 A1 is suitable for application in methane reforming with hydrogen sulfide at industrial scale.

Accordingly, there was a need for an improved process for the methane reforming with hydrogen sulfide to produce carbon disulfide.

It was found that this problem is solved by use of catalysts with an active phase comprising or consisting of an oxide and/or a sulfide of a group 3, group 4 and/or group 5 metal.

Object of the present invention is therefore a process for the hydrogen sulfide reforming of a hydrocarbon to produce carbon disulfide in the presence of a catalyst comprising or consisting of an active phase comprising or consisting of an oxide and/or a sulfide of a metal, wherein said metal is a group 3, a group 4 and/or a group 5 metal.

In the context of the present invention the terms a group 3 metal, a group 4 metal and a group 5 metal is used according to the IUPAC (International Union of Pure and Applied Chemistry) style, where the groups of the period table of the chemical elements are numbered from the left to the right with Arabic numbers. Therefore, the term a group 3 metal relates to one or more metals of the so-called scandium group, i.e. the first group of transition metals in the periodic table, in particular, the metals scandium, yttrium, and/or lanthanum. The term a group 4 metal relates to one or more metals of the so-called titanium group, i.e. the second group of transition metals in the periodic table, in particular, the metals titanium, zirconium, and/or hafnium. The term a group 5 metal relates to one or more metals of the so-called vanadium group, in particular, vanadium, niobium, and/or tantalum.

In an embodiment of the process according to the present invention the metal is one or more selected from the group consisting of scandium, yttrium, lanthanum, titanium, zirconium, hafnium, vanadium, niobium and tantalum.

In another embodiment of the process according to the present invention the catalyst is a supported catalyst.

In a preferred embodiment of the process according to the present invention the support is a one or more selected from the group consisting of aluminum oxide, silica, titanium dioxide, zeolites, carbon, zirconium oxide, magnesium oxide, clays and hydrotalcites.

Oxides or sulfides of elements in IUPAC groups 3, 4 and/or 5 alone also can serve as catalysts in the hydrogen sulfide reformation of hydrocarbons. In that case, the catalyst used in the process according to the present is preferably an unsupported catalyst, i.e. the said catalyst consists of an active phase comprising or consisting of an oxide and/or a sulfide of a metal, wherein said metal is a group 3, a group 4 and/or a group 5 metal.

In an alternative embodiment of the present invention the catalyst is an unsupported catalyst.

The active phase of the unsupported catalyst may consist of the oxide or sulfide of elements in IUPAC groups 3, 4 and/or 5 alone. Alternatively, the active phase of the unsupported catalyst may be diluted in order to adjust, specifically to reduce the activity of the catalyst.

In a preferred embodiment of the process according to the present invention the said catalyst consists of an active phase consisting of an oxide and/or a sulfide of a metal, wherein said metal is a group 3, a group 4 and/or a group 5 metal.

Alternatively, it is also possible that the active phase of the unsupported catalyst is diluted by a catalytically non-active component. Specifically, the active phase of the catalyst is not loaded onto a support or carrier, but it is mixed with an essentially not catalytically active or a catalytically inactive substance, such as talc or steatite. This mixing leads to a dilution of the active phase of the catalyst.

In an alternative preferred embodiment of the process according to the present invention the active phase of the catalyst is diluted by a catalytically non-active component.

As shown in the catalyst testing below, metal oxide catalysts of titanium, niobium, vanadium and/or zirconium gave the best results at all involved temperatures.

In an embodiment of the process according to the present invention, the metal of the metal oxide and/or metal sulfide is titanium, niobium, vanadium and/or zirconium.

Preferably, the catalyst with the metal oxide and/or metal sulfide is titanium, niobium, vanadium and/or zirconium consist of an active phase of a metal oxide and/or metal sulfide of titanium, niobium, vanadium and/or zirconium. In particular, the said catalyst is an unsupported catalyst.

In principle, the process according to the present invention is not subject to any limitations regarding a specific hydrocarbon. Nevertheless, C1 to C4 hydrocarbons are preferred because of their easy availability.

In an embodiment of the process according to the present invention the hydrocarbon is a C1 to C4 hydrocarbon.

Methane is a preferred C1 to C4 hydrocarbon because it is the main component of natural gas.

In a preferred embodiment of the process according to the present invention the hydrocarbon is methane.

The hydrogen sulfide reforming of a hydrocarbon, e.g. methane, to produce carbon disulfide, i.e. the main reaction, is accompanied by two side reactions. The first side reaction is the decomposition of the hydrocarbon, e.g. methane, which leads to the formation of carbonaceous decompositions on the catalyst and thus, to a deactivation of the catalyst. The other side reaction is the decomposition of hydrogen sulfide, which cannot be avoided at the high temperatures, typically more than 600°C, of the hydrogen sulfide reforming of a hydrocarbon to produce carbon disulfide. In order to reduce the formation of carbonaceous deposits on the catalyst and thus, deactivation of the catalyst, it is beneficial in the hydrogen sulfide reforming of a hydrocarbon that the ratio of hydrogen sulfide to carbon in the hydrocarbon is at least 2:1, e.g. in the range from 2:1 to 4:1. Preferably, the hydrogen sulfide reforming of a hydrocarbon uses a ratio of hydrogen sulfide to carbon in the hydrocarbon that is somewhat higher than the stoichiometric ratio of 2:1 for the ratio of hydrogen sulfide to carbon in the hydrocarbon. Preferably, the ratio of hydrogen sulfide to carbon in the hydrocarbon is at least 2.5:1, e.g. in the range from 2.5:1 to 4:1, or at least 3:1, e.g. in the range from 3:1 to 4:1.

In another embodiment of the process according to the present invention the ratio of hydrogen sulfide to carbon in the hydrocarbon is at least 2:1.

In yet another embodiment of the process according to the present invention the ratio of hydrogen sulfide to carbon in the hydrocarbon is at least 2.5:1.

In the case where methane is the hydrocarbon in the hydrogen sulfide reforming, the ratio of hydrogen sulfide to methane is at least 2:1, e.g. in the range from 2:1 to 4:1. Preferably, the hydrogen sulfide reforming of a hydrocarbon uses a ratio of hydrogen sulfide to methane that is somewhat higher than the stoichiometric ratio of 2:1 for the ratio of hydrogen sulfide to methane. Preferably, the ratio of hydrogen sulfide to methane is at least 2.5:1, e.g. in the range from 2.5:1 to 4:1, or at least 3:1, e.g. in the range from 3:1 to 4:1.

In a further embodiment of the process according to the present invention the ratio of hydrogen sulfide to methane is at least 2:1.

In yet a further embodiment of the process according to the present invention the ratio of hydrogen sulfide to methane is at least 2.5:1.

It was found that the effect of catalyst deactivation is rather strong for a platinum-based catalyst, specifically, the 0.5% platinum on γ-alumina catalyst as used in the processes of US 2017/0144966 A1 and US 2017/0158631 A1. It appears that the deactivation of this catalyst began directly when the hydrogen sulfide reforming was started in the presence of this catalyst. The increase of the ratio of hydrogen sulfide to methane to 3:1 was not suitable to avoid this deactivation process. Rather, it appears that the extent of deactivation was almost the same for the 0.5% platinum on γ-alumina catalyst when the ratio of the hydrogen sulfide is increased from 2:1 to 3:1.

By comparison, no catalyst deactivation was observed under the same reaction conditions when titanium dioxide was used as catalyst in the hydrogen sulfide reforming of a hydrocarbon, preferably methane, to produce carbon disulfide. Rather, the activity of the titanium dioxide catalyst remained stable for at least 6 hours when a ratio of hydrogen sulfide to methane of 2:1 was used. There were only small variations in the activity of the titanium dioxide catalyst over a period of 8 hours when the ratio of hydrogen sulfide to methane was increased to 3:1.

In principle, the process according to the present invention can be performed at any temperature which is suitable to effect the hydrogen sulfide reforming. Therefore, the process according to the present invention can be performed at temperatures in the range of from 800 to 1,100 °C. However, compared to the prior art of US 2017/0144966 A1 and US 2017/0158631 A1, the catalysts used in the process according to the present invention already achieve high CH₄ conversion rates and a selectivity to CS₂ of 100% at a temperature of only 900 °C. This is a significant improvement since the lower temperature of only 900 °C, compared to 1,100 °C in the best examples of the prior art, will also lead to a lower formation of carbonaceous deposits on the catalyst, without having any decrease in activity, i.e. conversion rates, and in selectivity to CS₂.

In a further embodiment of the process according to the present invention, the hydrogen sulfide reforming is performed at a temperature of from 800 to 1,100 °C, preferably from 800 to 1,000 °C or from 800 to 900 °C.

Prior to the use in the process according to the present invention, a catalyst comprising or consisting of an active phase comprising or consisting of an oxide of a metal, wherein said metal is a group 3, a group 4 and/or a group 5 metal, is typically subjected to a treatment with a H₂S comprising gas feed. This leads to a sulfidation of the metal oxide catalysts or metal oxide comprising catalysts. Therefore, all findings and experimental results below are also valid for a catalyst comprising or consisting of an active phase comprising or consisting of a sulfide of a metal, wherein said metal is a group 3, a group 4 and/or a group 5 metal.

### Description of the figures:

- Figure 1: shows the CH₄ conversion rate of metal oxide catalysts after background correction. Points next to each other were measured at the same temperature as indicated by a single point for said temperature, but for a better representation they were plotted next to each other.
- Figure 2: shows the apparent activation energy of metal oxide catalysts.
- Figure 3: shows the stability of metal oxide catalysts over a TOS of 86 min at 900 °C.
- Figure 4: shows the extent of deactivation of the metal oxide catalysts over a TOS of 86 min at 900 °C
- Figure 5: shows a comparison of the long-term stability between a TiO₂ and a 0.5% Pt/γ-Al₂O₃ catalyst at 900 °C with a CH₄:H₂S ratio of 1:3
- Figure 6: shows a comparison of the long-term stability between a TiO₂ and a 0.5% Pt/γ-Al₂O₃ catalyst at 900 °C with a CH₄:H₂S ratio of 1:2

### Experiments:

### I. Experimental setup

A plug-flow fixed bed reactor was assembled for catalyst evaluation in the CH₄-H₂S reforming. A quartz tube reactor (65 cm length × 6 mm outer diameter × 4 mm inner diameter) was placed into an oven. The oven was connected with a temperature controller, the cylinder containing the individual gases, i.e. inert gas, hydrogen, methane and hydrogen sulfide were connected with a flow control system, and with the inlet side of the tube reactor. The outlet side of the tube reactor was connected to a gas chromatograph (GC) equipped with a packed column (HS-Q 80/100 2.7 m 2.00 mm ID 1/8in OD Sulfinert SHDZU 14A NOC) and a thermal conductivity detector. A sulfur trap filled with quart wool was added downstream of the reactor to prevent the six-port valve and the packed column of the GC from being blocked. The tail gas was introduced into a NaOH absorber to remove hydrogen sulfide before evacuation.

### II. Catalyst supply and catalyst preparation

For the testing of unsupported metal oxide catalysts, various metal oxides were purchased from suppliers. Specifically, MgO was purchased from SCORA.SA, α-Al₂O₃ and TiO₂ (P25) from Evonik, γ-Al₂O₃ from Chevron, V₂O₅ from Merck, Nb₂O₅ from CBMM, ZrO₂, MoO₃, La₂O₃, La₂O₃-nano (particle size < 100 nm) from Sigma, and CeO₂-10 (ACTALYS^{®} HSA 10) and CeO₂-20 (ACTALYS^{®} HSA 20) from Rhodia. When the metal oxides were not already present as particles of 180 to 250 µm, they were either sieved to this fraction or ground with pestle and mortar, pressed, pelletized and sieved to sieve fractions of 180 to 250 µm.

The supported 0.5% Pt/γ-Al₂O₃ catalyst was purchased from STREM.

For the testing of supported catalysts, wetness impregnation was used for the preparation of γ-Al₂O₃-supprted metal catalysts pf group 3, 4 and 5 metals. The corresponding nitrates of metals in question were used as metal precursors. The nominal loadings were 6 wt.-% for all samples. Both the weighed metal salt and ground γ-Al₂O₃ powder were added into excess water, and then the mixture was magnetically stirred at room temperature under constant ventilation in a fume hood such that most water evaporated overnight. Afterwards, the sample was placed in a drying oven (100 °C) to ensure full evaporation of remaining water. Next, the dried sample was ground with pestle and mortar and calcined in a 100 mL/min of synthetic air at 500 °C for 5 h, following by pressing, pelletizing and sieving to sieve fractions of 180 to 250 µm.

### III. Catalyst testing

Quartz sand was selected as the packing/dilution material for the following research due to its rather low blank activity, compared to other packing/dilution materials such as SiC washed with acid. In order to determine the activity and selectivity of pure quartz sand in the hydrogen sulfide reforming, the quartz tube reactor was packed with 2.8 g of pure quartz sand (300 to 400 µm), the quartz sand was treated in the same way as in the later catalyst testing, and the CH₄ conversion and the CS₂ selectivity was determined at temperatures of 800, 825, 850, 875, and 900 °C. The thus measured values were later subtracted as background correction from the values obtained in the following catalyst testing.

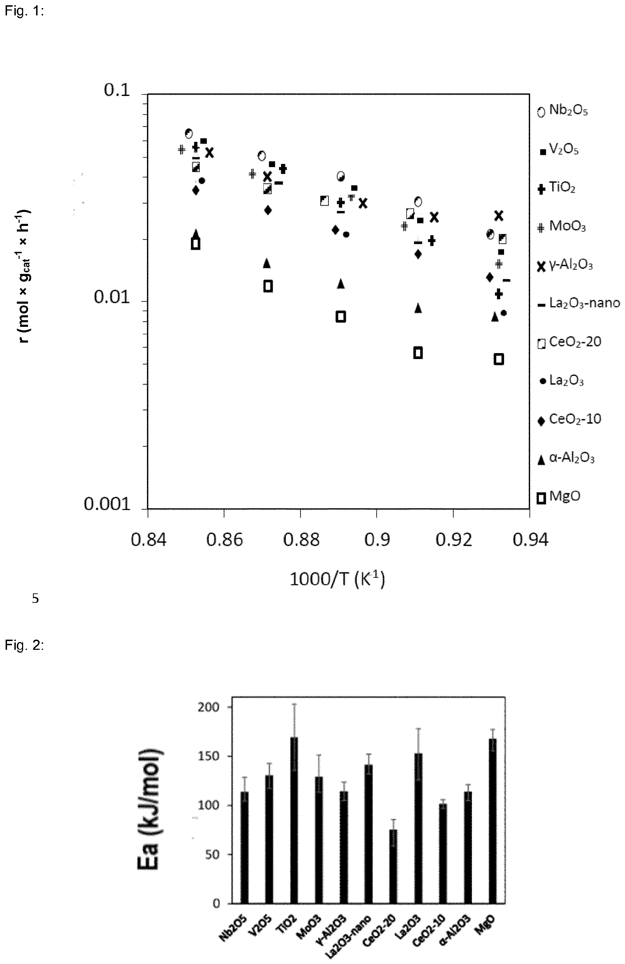

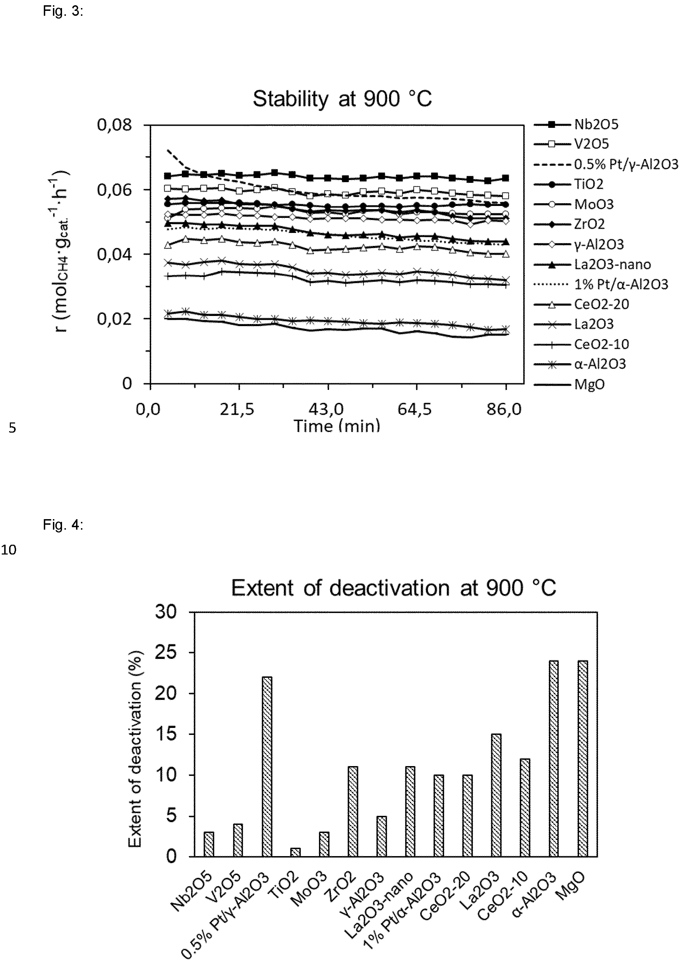

Successively, the quartz tube reactor was packed with 40 mg of quartz wool, 1800 mg of quartz sand (300 to 400 µm), 30 mg of the catalyst diluted with 300 of quartz sand (300 to 400 µm), and 700 mg of quartz sand (300 to 400 µm). The catalyst was loaded in the middle of the isothermal zone and pretreated in a 20 mL/min flow of 10% H₂S/H₂ mixed gas at 900 °C for 2h. After cooling down to 800 °C, a feed gas composed of 4 mL/min CH₄, 12 mL/min H₂S, and 34 mL/min N₂ was fed to the reactor. Then, a temperature program was executed for the evaluation of the catalyst, ramping stepwise from 800 to 900 °C to obtain the activation energy. The results for the apparent activation energy of the metal oxide catalyst are shown in Figure 2. The conversions of CH₄ and H₂S were measured at 800, 825, 850, 875 and 900 °C each four times, and then the selectivity to CS₂ was determined. The interval between each point was 4.3 min. The results for the CH₄ conversion rates are shown in Figure 1. The stability of the catalyst was tested at 900 °C for 86 min (20 injections in GC), and the selectivity to CS₂ was determined for one time at the end. The results for the stability of metal oxide catalysts and the extent of deactivation over a TOS of 86 min at 900 °C are shown in Figures 3 and 4. The results for the CH₄ conversion and the selectivity to CS₂ are summarized in Table 1 for each of the tested metal oxide catalysts.

**Table 1: Results of the catalysts testing (MgO, α-Al₂O₃, γ-Al₂O₃, 0.5% Pt/γ-Al₂O₃, and MoO₃ are comparative examples)**

| Catalyst | CH₄ conversions (%) | | | | | | | CS₂ selectivity (%) |
|---|---|---|---|---|---|---|---|---|
| | 800°C, 20 min | 825°C, 20 min | 850°C, 20 min | 875°C, 20 min | 900°C, 20 min | 900°C, 1.5 h | 900°C, 8h | 900°C |
| MgO | 1.62 | 1.73 | 2.60 | 3.64 | 5.84 | 4.65 | | 100 |
| α-Al₂O₃ | 2.60 | 2.86 | 3.75 | 4.72 | 6.53 | 5.18 | | 100 |
| γ-Al₂O₃ | 7.97 | 7.85 | 9.17 | 12.30 | 16.12 | 15.36 | | 100 |
| 0.5% Pt/γ-Al₂O₃ | | | | | | 17.11 | 15.14 | 100 |
| TiO₂ (P25) | 3.35 | 6.04 | 9.22 | 13.43 | 17.09 | 16.91 | 17.64 | 100 |
| V₂O₅ | 5.32 | 7.59 | 10.84 | 14.20 | 18.51 | 17.78 | | 100 |
| ZrO₂ | 8.02 | 11.61 | 13.92 | 14.81 | 17.35 | 15.62 | | 100 |
| Nb₂O₅ | 6.49 | 9.30 | 12.34 | 15.49 | 19.88 | 19.45 | | 100 |
| MoO₃ | 4.66 | 7.10 | 9.92 | 12.70 | 16.62 | 16.02 | | 100 |
| La₂O₃ | 2.69 | | 6.56 | | 11.65 | 9.78 | | 100 |
| La₂O₃-nano | 3.87 | 5.90 | 8.26 | 11.48 | 15.08 | 13.45 | | 100 |
| CeO₂-10 | 4.02 | 5.21 | 6.81 | 8.47 | 10.59 | 9.33 | | 100 |
| CeO₂-20 | 6.15 | 8.16 | 9.41 | 10.79 | 13.69 | 12.28 | | 100 |

The Arrhenius plot in Figure 1 for various metal oxides after background correction shows that Nb₂O₅, V₂O₅ were more active than others, whose rates at 900 °C were even higher than that of 0.5% Pt/γ-Al₂O₃. TiO₂ shows the highest activation energy, suggesting a greater advantage in activity at higher temperatures. The activation energy of MgO was as high as that of TiO₂, but its mass-specific activity was much lower than that of TiO₂. This is also shown in the table 1, where MgO was the least active of all tested catalysts. Table 1 also shows that all tested metal oxide catalyst gave a selectivity to CS₂ of 100%. More importantly, Table 1 also shows that the metal oxide catalysts of titanium, vanadium, zirconium and niobium according to the present invention consistently gave the best results over all used temperatures.

Further, the metal oxide catalysts of titanium, vanadium and niobium showed a high activity and stability, at a temperature of 900 °C over a time period of 86 min (see Figure 3). The commercial 0.5% Pt/γ-Al₂O₃ catalyst slow showed a high initial activity at 900 °C. However, in contrast to all other catalysts this catalyst showed a strong decrease in activity and stability already in the first minutes.

This effect of deactivation on CH₄ conversion rate was further investigated in examples IV and V. In comparison, the metal oxide catalysts of titanium, vanadium and niobium showed the lowest degree of deactivation in the hydrogen sulfide reforming (see Figure 4). In particular, the metal oxide catalyst of titanium was by far the most stable of all tested catalysts.

### IV. Comparison of a TiO₂ catalyst with a 0.5% Pt/γ-Al₂O₃ catalyst at H₂S/CH₄ ratio of 3:1

Next, a long-term stability test was run for 8 h over TiO₂ and a commercial 0.5% Pt/γ-Al₂O₃ catalyst (STREM) in order to illustrate the effects of the improved long-term stability of the TiO₂ catalyst over the 0.5% Pt/γ-Al₂O₃ catalyst on the CH₄ conversion rates in the hydrogen sulfide reforming.

50 mg of quartz wool and 30 mg of a catalyst containing 0.5% by weight of platinum on alumina (180 to 250 µm, without dilution), sold by STREM, were successively packed into a quartz tube reactor (65 cm × 6 mm OD × 4 mm ID). It was ensured that the catalyst was located in the middle of the isothermal zone determined in prior tests. The pretreatment was done in a 20 mL/min flow of 10% H₂S/H₂ mixed gas at 900 °C for 20 min. Then, the three-way valve was switched to connect the inlet of the reactor to a feed gas composed of 4 mL/min CH₄, 12 mL/min H₂S, i.e. H₂S/CH₄ ratio of 3:1, and 34 mL/min He. The stability of catalysts was tested at 900 °C for 480 min.

The same experiment was repeated with 30 mg of a TiO₂ catalyst (180 to 250 µm, without dilution).

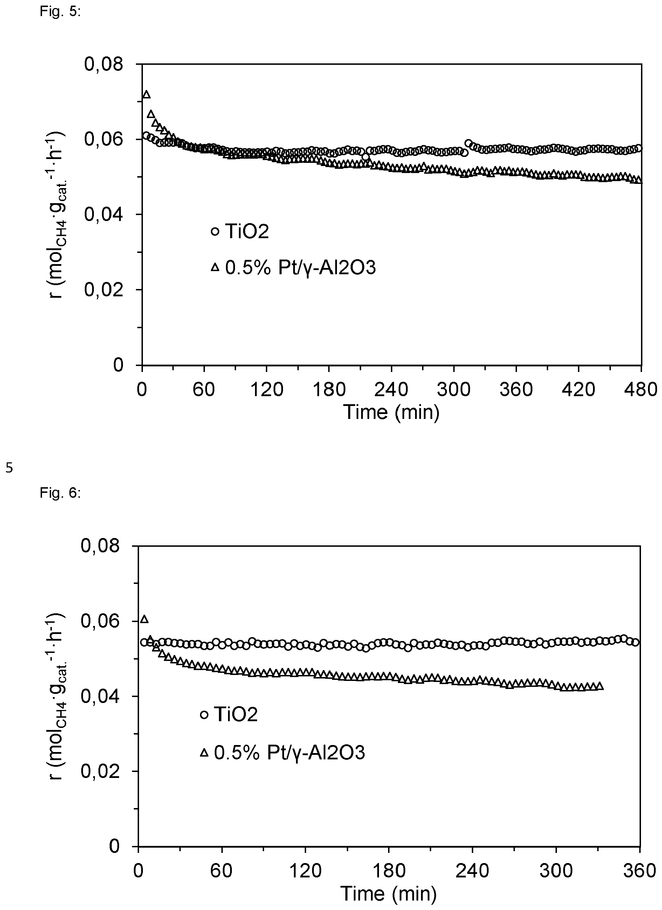

The results are shown in Figure 5. Although the initial mass-specific activity of the TiO₂ catalyst was inferior to the 0.5% Pt/γ-Al₂O₃ catalyst, the latter deactivated more rapidly, ending up at a lower rate of CH₄ conversion than the TiO₂ catalyst. At the beginning of the experiments the activity of the 0.5% Pt/γ-Al₂O₃ catalyst was approximately 16% higher than the activity of the TiO₂ catalyst. However, the activity the 0.5% Pt/γ-Al₂O₃ catalyst decreased to the value of the TiO₂ catalyst within the first 60 minutes. From then on, the activity the 0.5% Pt/γ-Al₂O₃ catalyst continually decreased even further, and after another 60 minutes, it fell below the activity of the TiO₂ catalyst. At the end of the experiment, i.e. after 480 minutes in total, the activity the 0.5% Pt/γ-Al₂O₃ catalyst was even approximately 15% lower than the activity of TiO₂ catalyst. Thus, the 0.5% Pt/γ-Al₂O₃ catalyst continuously deactivated after 8 h at a slow rate. In contrast, the TiO₂ catalyst did not show any deactivation during the 8 h run, especially after the first hours of TOS.

### V. Comparison of a TiO₂ catalyst with a 0.5% Pt/γ-Al₂O₃ catalyst at H₂S/CH₄ ratio of 2:1

50 mg of quartz wool and 30 mg of a catalyst containing 0.5% by weight of platinum on alumina (180 to 250 µm, without dilution), sold by STREM, were successively packed into a quartz tube reactor (65 cm × 6 mm OD × 4 mm ID). It was ensured that the catalyst was located in the middle of the isothermal zone determined in prior tests. The pretreatment was done in a 20 mL/min flow of 10% H₂S/H₂ mixed gas at 900 °C for 2 h. Then, the three-way valve was switched to connect the inlet of the reactor to a feed gas composed of 4 mL/min CH₄, 8 mL/min H₂S, i.e. H₂S/CH₄ ratio of 2:1, and 38 mL/min He. The stability of catalysts was tested at 900°C for 480 min.

The same experiment was repeated with 30 mg of a TiO₂ catalyst (180 to 250 µm, without dilution).

The results are shown in Figure 6. At the beginning of the experiments the activity of the 0.5% Pt/γ-Al₂O₃ catalyst was approximately 10% higher than the activity of the TiO₂ catalyst. However, the activity of the 0.5% Pt/γ-Al₂O₃catalyst started to decrease significantly right from the beginning of the experiments. After a few minutes, it fell below the activity of the TiO₂ catalyst. At the end of the experiments, i.e. after 360 minutes in total, the activity the 0.5% Pt/γ-Al₂O₃catalyst was even approximately 24% lower than the activity of TiO₂ catalyst. Again, the 0.5% Pt/γ-Al₂O₃ catalyst continuously deactivated after 6 h, this time at a higher rate than in example V. In contrast, the TiO₂ catalyst did not show any deactivation during the 6 h run, especially after the first hours of TOS.

## Claims

1. A process for the hydrogen sulfide reforming of a hydrocarbon to produce carbon disulfide in the presence of a catalyst comprising or consisting of an active phase comprising or consisting of an oxide and/or a sulfide of a metal, wherein said metal is a group 3, a group 4 and/or a group 5 metal.

2. The process according to claim 1, wherein the metal is one or more selected from the group consisting of scandium, yttrium, lanthanum, titanium, zirconium, hafnium, vanadium, niobium and tantalum.

3. The process according to claim 1 or 2, wherein the catalyst is a supported catalyst.

4. The process according to claim 3, wherein the support is a one or more selected from the group consisting of aluminum oxide, silica, titanium dioxide, zeolites, carbon, zirconium oxide, magnesium oxide, clays and hydrotalcites.

5. The process according to claim 1 or 2, wherein the catalyst is an unsupported catalyst.

6. The process according to claim 5, wherein the catalyst consists of an active phase consisting of an oxide and/or a sulfide of a metal, wherein said metal is a group 3, a group 4 and/or a group 5 metal.

7. The process according to claim 5, wherein the active phase of the catalyst is diluted by a catalytically non-active component.

8. The process according to any of claims 1 to 7, wherein the metal is niobium, zirconium, vanadium, and/or titanium.

9. The process according to any of claims 1 to 8, wherein the hydrocarbon is a C1 to C4 hydrocarbon.

10. The process according to any of claims 1 to 9, wherein the ratio of hydrogen sulfide to carbon in the hydrocarbon is at least 2:1.

11. The process according to any of claims 1 to 10, wherein the ratio of hydrogen sulfide to carbon in the hydrocarbon is at least 2.5:1.

12. The process according to any of claims 1 to 11, wherein the hydrocarbon is methane.

13. The process according to claim 12, wherein the ratio of hydrogen sulfide to methane is at least 2:1.

14. The process according to claim 13, wherein the ratio of hydrogen sulfide to methane is at least 2.5:1.

15. The process according to any of claims 1 to 14, wherein the hydrogen sulfide reforming is performed at a temperature of from 800 to 1,100 °C.
